Europäisches Patentamt

European Patent Office

Office européen des brevets

(11) Veröffentlichungsnummer: **0 368 152**
**A2**

(12) **EUROPÄISCHE PATENTANMELDUNG**

(21) Anmeldenummer: 89120332.5

(51) Int. Cl.⁵: **F16F 1/36, B26B 13/00**

(22) Anmeldetag: 03.11.89

(30) Priorität: 05.11.88 DE 8813869 U

(43) Veröffentlichungstag der Anmeldung:
**16.05.90 Patentblatt 90/20**

(84) Benannte Vertragsstaaten:
**AT BE CH DE ES FR GB GR IT LI LU NL SE**

(71) Anmelder: **Tondeo-Werk GmbH**
**Höhscheider Weg 39-45**
**D-5650 Solingen 12(DE)**

(72) Erfinder: **Schultz, Erhard**
**Schorbergerstrasse 34**
**D-5650 Solingen 2(DE)**

(74) Vertreter: **Stollreiter, Helmut**
**c/o Wella AG. Abteilung R Berliner Allee 65**
**D-6100 Darmstadt(DE)**

(54) **Dämpfungs- oder/und Tragelement.**

(57) Dämpfungs- oder/und Tragelement (2`` ) aus elastischem Material mit mindestens einem Befestigungsteil (5`` ), wobei folgende erfindungsgemäße Merkmale vorgesehen sind:
- das Befestigungsteil (5`` ) weist in axialer Fortsetzung einen engeren fingerartigen Vorsprung (7) auf;
- das Befestigungsteil (5`` ) ist derart dimensioiert, daß es formschlüssig pressend einen Befestigungssitz (9´) einnehmen kann;
- der Vorsprung (7) ist derart dimensioniert, daß dieser leichtgängig durch den Sitz (9`) hindurchgeführt und erfaßt werden kann.

In einem Ausführungsbeispiel ist vorgesehen, einen entsprechenden Dämpfungspuffer (2`` ) für Scherenaugen (3, 4) vorzusehen, wobei der überschüssige Befestigungsteil (5`` ) mit dem Vorsprung (7) abgeschnitten ist.

FIG. 6

FIG. 7

## Dämpfungs- oder/und Tragelement

Die Erfindung betrifft ein Dämpfungs- oder/und Tragelement aus elastischem Material mit mindestens einem Befestigungsteil.

Ein derartiges Element ist z. B. als Dämpfungselement bei einer Schere bekannt und dient dazu, beim Schneiden das Schnitt- bzw. Schließgeräusch der Schere an den Griffen zu dämpfen. Dieses Element weist an einer Seite einen zylinderförmigen Vorsprung auf, der in einem Preßsitz mittels einer Sackbohrung mit einem Griff verbunden ist, wodurch nur ein relativ hartelastisches Material verwendet werden kann. Dadurch kann keine optimale Dämpfung des Schnitt-bzw. Schließgeräusches erreicht werden.

Eine andere Art von Elementen sind z. B. als Gerätefüße oder Abdeckklappenanschlagpuffer bekannt. Diese bestehen in der Regel aus dem Fuß- bzw. Anschlagsteil und weisen an einem Vorsprung einen Befestigungskragen auf, der das Element nach Durchdrücken durch eine Aufnahmedurchgangsbohrung als Gegenlager festhält. Dieser Vorgang ist sehr umständlich und schränkt die Ausgestaltung des Fußes bzw. des Anschlags ein, da in der Regel von der Fuß- bzw. Anschlagsseite her der Befestigungskragen durch die Bohrung gedrückt werden muß.

Aufgabe der Erfindung ist es daher, gattungsgleiche Elemente zu schaffen, die die oben genannten Nachteile nicht aufweisen.

Gelöst wird diese Aufgabe gemäß dem kennzeichnenden Teil des Anspruchs 1. Weitere vorteilhafte Ausgestaltungen der Erfindung gehen aus den Unteransprüchen hervor.

Durch den durchgehenden Befestigungssitz (z. B. an einer Gehäusewand) kann für das Element nahezu beliebiges elastisches Material eingesetzt werden, wodurch je nach Zweck das Element optimal hinsichtlich Dämpfungs- oder/und Trageeigenschaft angepaßt werden kann. Eine besonders vorteilhafte Handhabung bzw. Montage des Elements ist dadurch gegeben, daß das Befestigungsteil derart mit einem engeren fingerartigen Vorsprung versehen ist, daß dieser leichtgängig durch den Sitz hindurchgeführt und erfaßt werden kann. Wahlweise kann das überschüssige Ende abgeschnitten werden.

In einer Ausführung ist das Befestigungsteil im Anfangsbereich mit einer Einschnürung versehen, die mit einer Sitzverengung eines zu dämpfenden oder zu tragenden Gegenstands korrespondiert. Diese Sitzverengung kann herstellungstechnisch einfach realisiert werden.

Bei einem anderen Ausführungsbeispiel ist vorgesehen, das Befestigungsteil zylindrisch auszugestalten das dann mit mehreren Sitzverengungen korrespondiert. Vorzugsweise sind die Sitzverengungen als ein Gewinde ausgestaltet, wodurch der Sitz bzw. die Sitzverengungen fertigungstechnisch günstig realisierbar sind.

Als vorteilhaftes Anwendungsgebiet ist vorgesehen, das Element als Dämpfungspuffer für eine Schere vorzusehen, insbesondere als Berührungspuffer der Scherengriffe.

Bei einem anderen Anwendungsgebiet ist vorgesehen, das Befestigungsteil im Anfangsbereich zylindrisch auszugestalten und am Ende mit mindestens einem Kragen zu versehen, wodurch das Element vorteilhaft als beispielsweise ein Gerätefuß vorgesehen werden kann. Auch kann erfindungsgemäß das Element als ein Klappenanschlagspuffer (z. B. für eine Abdeckplatte) vorgesehen werden. Ein weiteres Anwendungsgebiet ist dadurch gegeben, daß zwei entgegengesetzt angeordnete Befestigungsteile vorgesehen werden, wodurch zwei verschiedene Teile am Element befestigt werden können und dieses als Schwingungsdämpfer vorgesehen werden können.

Je nach Materialhärte kann vorgesehen werden, das Element zum Tragen oder zum Schwingungsdämpfen vorzusehen. Es kann aber auch vorgesehen werden, durch geeignete Materialhärte ein Tragen sowie auch ein Dämpfen vorzusehen.

Als Dämpfungspuffer für die Griffringe einer Schere hat sich besonders vorteilhaft eine Shore-A-Härte von 70 bis 75 von Vorteil erwiesen. Dadurch wird ein Teil der Energie beim Schließen vom Puffer aufgenommen und mit dem Öffnen wieder abgegeben (Federeffekt), wodurch das Schneiden mit der Schere erleichtert wird.

Vorteilhafterweise besteht das Element aus Silikon-Kautschuk.

Ein weiterer Vorteil der Erfindung ist auch darin zu sehen, daß durch ein einheitliches Element durch das elastische Befestigungsteil ein großer Materialstärkenbereich abdeckbar ist.

Die Erfindung wird anhand mehrerer Ausführungsbeispiele beschrieben.

Es zeigt:

Fig. 1 eine Draufsicht auf eine Schere mit einem Dämpfungselement;

Fig. 2 eine Einzelheit "Z" als Stand der Technik;

Fig. 3 ein erstes Element als Dämpfungspuffer;

Fig. 4 eine Einzelheit "Z" mit einem mit einem Scherengriff verbundenen Dämpfungspuffer;

Fig. 5 eine Einzelheit "Z" mit einem mit einem Scherengriff verbundenen Dämpfungspuffer und abgeschnittenem überschüssigen Ende;

Fig. 6 ein zweites Ausführungsbeispiel eines Dämpfungspuffers;

Fig. 7 eine Schnittdarstellung eines Dämpfungspuffers nach der Fig. 6 bei einer Schere;

Fig. 8 eine Anwendung als Klappenanschlagspuffer;

Fig. 9 eine Anwendung als Gerätefüße;

Fig. 10 in einer Schnittdarstellung ein Tragelement als Gerätefuß;

Fig. 11 in einer Schnittdarstellung ein Element als Schwingungsdämpfer zwischen zwei Körpern, wobei das Dämpfungselement nach der Fig. 12 zwei entgegengesetzt angeordnete Befestigungsteile aufweist.

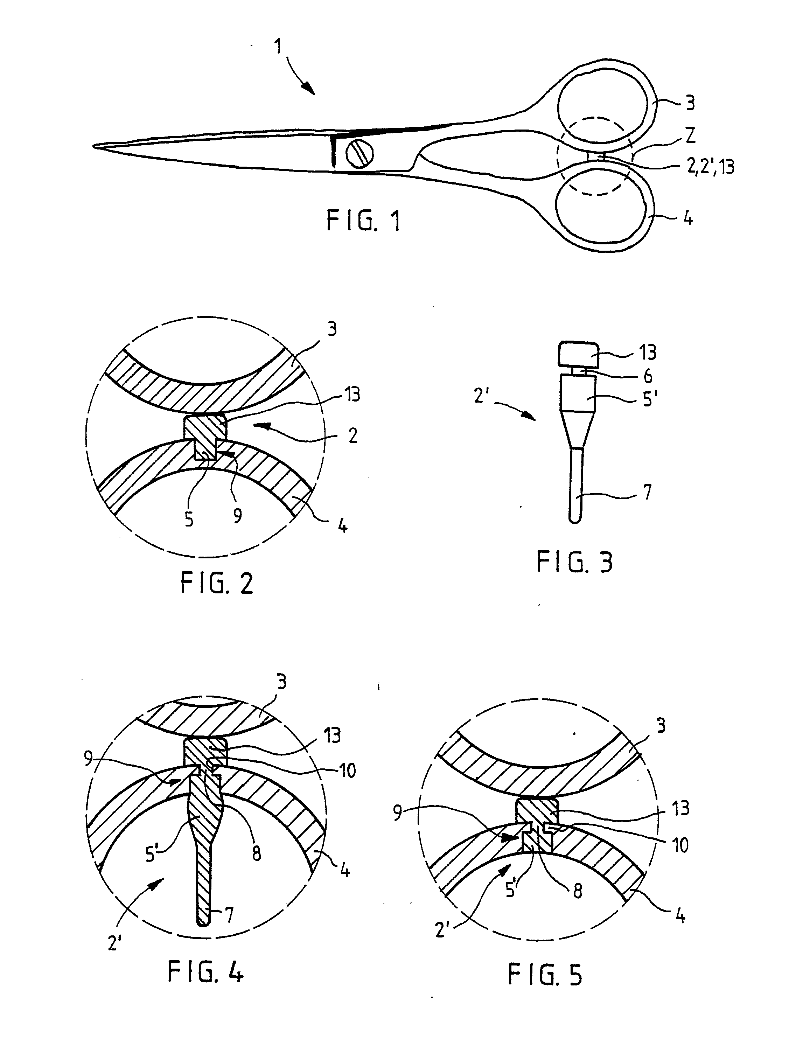

In der Fig. 1 ist in einer Draufsicht eine Schere 1 mit einem Dämpfungspuffer 13 als Element 2, 2` dargestellt. Der Dämpfungspuffer 13 ist zwischen den beiden Griffen 3, 4 angeordnet und einseitig mit einem Griff 4 verbunden. Die Einzelheit "Z" ist in der Fig. 2 dargestellt und stellt den bekannten Stand der Technik dar. Dieser Puffer 13 ist durch einen Preßsitz mit dem Griff 4 verbunden. Durch das relativ harte Material des Dämpfungspuffers 13 werden die Berührungsgeräusche der beiden Griffe 3, 4 nicht verhindert.

In der Fig. 3 ist das erfindungsgemäße Element 2` als Puffer 13 dargestellt. Dieser besteht aus einem weichelastischem Material, beispielsweise aus Gummi oder einem weichelastischem Kunststoff. Der Puffer 13 weist an einer Seite ein Befestigungsteil 5` auf, der mit einer Einschnürung 6 versehen ist. Das zylinderförmige Befestigungsteil 5` ist durch einen fingerartigen Vorsprung 7 verlängert. Der Durchmesser des fingerartigen Vorsprungs 7 ist geringfügig kleiner als der Durchmesser der Bohrung 8 für den Sitz der Einschnürung 6. Dadurch kann der fingerartige Vorsprung 7 leicht durch die Bohrung 8 am Griff 4 durchgeführt werden. Dieser Zustand ist in der Fig. 4 dargestellt, wobei der Puffer 13 mittels eines Preßsitzes mit dem Griff 4 formschlüssig und elastisch verbunden ist, nachdem hierzu an dem fingerartigen Vorsprung 7 gezogen wurde. Das überschüssige Ende (Teil des zylinderförmigen Befestigungsteils 5 und der fingerartige Vorsprung 7) wird anschließend abgeschnitten, womit damit die Schere 1 ,gebrauchsfertig ist. Dieser Zustand ist in der Fig. 5 dargestellt.

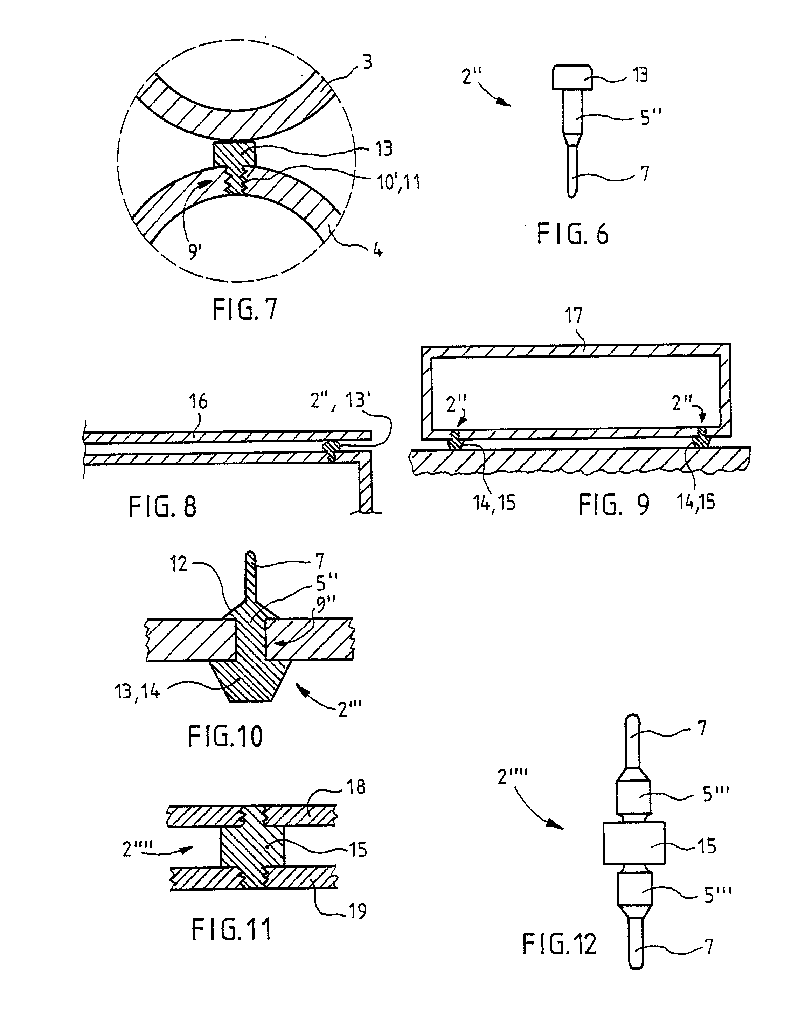

Ein weiteres Ausführungsbeispiel eines Elements 2`` mit einem zylinderförmigen Befestigungsteil 5`` ist in der Fig. 6 dargestellt. Durch das Ziehen am fingerartigen Vorsprung 7 verkleinert sich der Durchmesser des Befestigungsteils 5`` , wodurch der Sitz 9` leicht eingenommen werden kann. Nach Loslassen des Vorsprungs 7 dehnt sich das Befesti gungsteil 5`` formschlüssig aus, womit eine relativ feste Verbindung hergestellt ist. Das fertig montierte Element 2`` an einem Griff 4 einer Schere 1 ist in der Fig. 7 dargestellt, wobei als Sitz 9` ein Gewinde 11 für das Befestigungsteil 5`` vorgesehen ist. Gemäß der Fig. 5 ist auch hier das überschüssige Ende des Befestigungsteils 5`` mit dem fingerartigen Vorsprung 7 abgeschnitten.

Eine andere Anwendung des Elements 2`` ist in der Fig. 8 dargestellt, wobei ein Dämpfungspuffer 13` als Anschlagspuffer für eine Klappe 16 dient. Eine solche Klappe 16 kann z. B. zum Abdecken eines Bedienfeldes vorgesehen sein.

In der Fig. 9 sind Elemente 2`` vorgesehen, die als Füße 14 ein Gerät 17 tragen. Zu diesem Zwecke können die Elemente 2`` aus relativ hartem Material bestehen. Für den Fall , daß die Füße 14 zugleich auch als Schwingungsdämpfer 15 dienen sollen, ist ein relativ weiches Material der Elemente 2`` von Vorteil.

Ein weiteres Ausführungsbeispiel eines Elements 2``` als Dämpfungspuffer 13 oder Fuß 14 ist in der Fig. 10 dargestellt. Dabei kann der Sitz 9`` mit einem geringen Spiel versehen sein, da durch den Befestigungskragen 12 und durch die Spannkraft des Befestigungsteils 5`` eine hinreichende Befestigung des Elements 2``` gegeben ist. Zusätzlich könnte natürlich zur Erhöhung der Befestigung des Elements 2``` auch ein Sitz mit einem Gewinde 11 nach der Fig. 7 vorgesehen werden. Die Dimensionierung des Sitzes 9`` und des Befestigungsteils 5`` , mit dem Kragen 12 muß derart vorgesehen werden, daß der Kragen 12 durch den Sitz 9`` mittels des fingerartigen Vorsprungs 7 durch den Sitz 9`` hindurchgezogen werden kann. Durch das elastische Verhalten des Befestigungsteils 5`` können mit einem einheitlichen Element verschiedene Wandstärken erfaßt werden.

Eine Verwendung des Elements 2```` als Schwingungsdämpfer 15 ist in der Fig. 11 dargestellt. Es kann eine Wand 18 gegenüber einer Wand 19 als freischwingend vorgesehen werden wie auch umgekehrt.

Das in der Fig. 11 eingesetzte Element 2```` vor seinem Einbau ist in der Fig. 12 dargestellt.

**Bezugsziffernliste**

1 Schere
2, 2`, 2``, 2```, 2```` Element
3 Griff
4 Griff
5, 5`, 5``, 5``` , Befestigungsteil
6 Einschnürung
7 fingerartiger Vorsprung
8 Bohrung
9, 9`, 9`` Sitz
10, 10` Sitzverengung

11 Gewinde
12 Kragen
13, 13` Dämpfungspuffer
14 Fuß
15 Schwingungsdämpfer
16 Klappe
17 Gerät
18 Wand
19 Wand

**Ansprüche**

1. Dämpfungs- oder/und Trageelement (2) aus elastischem Material mit mindestens einem Befestigungsteil (5), **gekennzeichnet durch** folgende Merkmale:
- das Befestigungsteil (5`, 5``, 5```) weist in axialer Fortsetzung einen engeren fingerartigen Vorsprung (7) auf;
- das Befestigungsteil (5`, 5``, 5```) ist derart dimensioniert, daß es formschlüssig pressend einen Befestigungssitz (9, 9`, 9``) einnehmen kann;
- der Vorsprung (7) ist derart dimensioniert, daß dieser leichtgängig durch den Sitz (9, 9`, 9``) hindurchgeführt und erfaßt werden kann.

2. Element nach Anspruch 1, **dadurch gekennzeichnet,** daß das Befestigungsteil (5`) des Elements (2`) im Anfangsbereich mit einer Einschnürung (6) versehen ist, die mit einer Sitzverengung (10) korrespondiert.

3. Element nach Anspruch 1, **dadurch gekennzeichnet,** daß das Befestigungsteil (5`) des Elements (2``) zylindrisch ausgestaltet ist und mit mehreren Sitzverengungen (10`) korrespondiert.

4. Element nach Anspruch 3, **dadurch gekennzeichnet,** daß die Sitzverengungen (10`) als ein Gewinde (11) ausgestaltet sind.

5. Element nach Anspruch 1 und/oder Anspruch 2 oder Anspruch 1 und Anspruch 3 oder Anspruch 4, **dadurch gekennzeichnet,** daß das Element (2```) als Dämpfungspuffer (13) für eine Schere (1) vorgesehen ist.

6. Element nach Anspruch 5, **dadurch gekennzeichnet,** daß der Dämpfungspuffer (13) einseitig an einem Scherengriff (4) zum Dämpfen der Berührung beider Scherengriffe (3, 4) angeordnet ist.

7. Element nach Anspruch 1, **dadurch gekennzeichnet,** daß das Befestigungsteil (5``) im Anfangsbereich zylindrisch ausgestaltet ist und am Ende mit mindestens einem Kragen (12) versehen ist.

8. Element nach mindestens einem der vorangegangenen Ansprüche, **dadurch gekennzeichnet,** daß das Element (2```) als ein Gerätefuß (14) vorgesehen ist.

9. Element nach mindestens einem der vorangegangenen Ansprüche, **dadurch gekennzeichnet,** daß das Element (2``) als ein Klappenanschlagspuffer (13`) vorgesehen ist.

10. Element nach mindestens einem der vorangegangenen Ansprüche, **dadurch gekennzeichnet,** daß zwei entgegengesetzt angeordnete Befestigungsteile (5```, 5```) vorgesehen sind.

11. Element nach Anspruch 10 oder nach mindestens einem der Ansprüche 1 bis 9, **dadurch gekennzeichnet,** daß das Element (2````) als ein Schwingungsdämpfer (15) vorgesehen ist.

12. Element nach mindestens einem der vorangegangenen Ansprüche, **dadurch gekennzeichnet,** daß eine Materialhärte von Shore-A 30 bis 90 vorgesehen ist.

13. Element nach Anspruch 5 oder Anspruch 6, **dadurch gekennzeichnet,** daß eine Shore-A-Härte von 70 bis 75 vorgesehen ist.

14. Element nach mindestens einem der vorangegangenen Ansprüche, **dadurch gekennzeichnet,** daß das Element (2`, 2``, 2```, 2````) aus Silikon-Kautschuk besteht.

FIG. 1

FIG. 2

FIG. 3

FIG. 4

FIG. 5

FIG. 7

FIG. 6

FIG. 8

FIG. 9

FIG.10

FIG.11

FIG.12